# EUROPEAN PATENT SPECIFICATION

(11) **EP 3 890 648 B1**
(45) Date of publication and mention of the grant of the patent: **10.05.2023**
(21) Application number: 19821296.1
(22) Date of filing: 05.12.2019
(51) Int. Cl.: A61C 5/73, A61C 5/77, B33Y 10/00, B33Y 30/00, B33Y 80/00

(54) **DENTAL CROWN HAVING A THREE-DIMENSIONAL PRINTED HIGHLY RETENTIVE LAYER AND METHODS OF MAKING THE SAME**
ZAHNKRONE MIT EINER DREIDIMENSIONALEN GEDRUCKTEN HOCHRETENTIVEN SCHICHT UND VERFAHREN ZU IHRER HERSTELLUNG
COURONNE DENTAIRE COMPRENANT UNE COUCHE À RÉTENTION ÉLEVÉE IMPRIMÉE EN TROIS DIMENSIONS ET SES PROCÉDÉS DE FABRICATION

(30) Priority: 07.12.2018 US 201862776666 P
(43) Date of publication of application: 13.10.2021
(73) Proprietor: 3M Innovative Properties Company, Saint Paul, Minnesota 55133-3427 (US)
(72) Inventor: FALSAFI, Afshin, Saint Paul, Minnesota 55133-3427 (US); PLOTNIKOV, Elizaveta Y., Saint Paul, Minnesota 55133-3427 (US); PEDERSEN, Shane C., Saint Paul, Minnesota 55133-3427 (US); HANSEN, James D., Saint Paul, Minnesota 55133-3427 (US)
(74) Representative: Vossius & Partner Patentanwälte Rechtsanwälte mbB
(86) International application number: PCT/IB2019/060488
(87) International publication number: WO 2020/115703

(56) References cited:
- WO-A1-2007/097747
- WO-A1-2012/021442
- WO-A1-2019/087126

## Description

### Background

Preformed stainless-steel crowns are still the preferred choice for whole or partial replacements of teeth. They are a very durable and reliable restoration for a tooth in need of complete coverage. However, stainless-steel crowns have an unattractive appearance. Thus, there is a need for stainless-steel dental crowns that have a more natural look with preferably a more natural look with a tooth-like appearance. Various dental crowns and methods of making dental crowns are disclosed, for example in: U.S. Pat. No. 4,068,379; U.S. Pat. No. 6,663,390; U.S. Pat. No. 6,106,295; U.S. Pat. No. 7,008,229; U.S. Pat. No. 8,597,762; U.S. Pat. No. 9,044,292; U.S. Patent Publication 2009/0286205; PCT Patent Application No. 2018/058590; Chinese Pat. No. 1,163,093; European Pat. No. 0156273; European Pat. No. 0051704; and German Patent Publication 3600977.

A dental crown and a method of its manufacture is also known from WO 2007/097747 A1.

However, it is always desirable to create better solutions for creating long lasting dental crowns.

### Summary

The claimed invention relates to a dental crown as defined in independent claim 1.

The claimed invention relates also to a method of forming a dental crown as defined in independent claim 12.

The claimed invention relates also to a method of forming a dental crown as defined in independent claim 14.

The details of one or more examples of this disclosure are set forth in the accompanying drawings and the description below. Other features, objects, and advantages of this disclosure will be apparent from the description and drawings, and from the claims.

### Brief Description of the Drawings

Figures 1 and 2 illustrate prior art dental crowns, where the esthetic coating has delaminated from the stainless-steel crowns;
Figure 3 illustrates an esthetic dental crown of the present invention as it is being placed on a tooth that is prepared to receive it;
Figure 4 is an elevational front (facial) view of an esthetic dental crown illustrated in Figure 3;
Figure 4A is a cross-sectional view taken along line 4A-4A in Figure 4.
Figure 5 is an elevational profile (interproximal) view of another esthetic dental crown of the present invention;
Figure 5A is a cross-sectional view taken along line 5A-5A in Figure 5.
Figure 6 illustrates layers used to make a laminate for use in a dental blank;
Figure 7 illustrates a magnified view of the layers to make a laminate for use in a dental blank;
Figure 8 illustrates one embodiment of a schematic view of bonding the metal layer to the coating retention layer;
Figure 9 illustrates a magnified view of the layers after bonding;
Figure 10 illustrates one embodiment of a three-dimensional printed metal coating retention layers;
Figures 11-14 show schematic cross-sections through the deep-drawing die in the four different phases of a deep-drawing process;
Figure 15 illustrates a cross-sectional view of the dental blank with three-dimensional printed metal coating retention layer after the coating step;
Figure 16A and 16B illustrate one embodiments of the metal shell after the forming process and coating process, respectively;
Figure 17A and 17B illustrates another embodiment of the dental crown after the forming process of the present invention after the coating process, respectively;
Figures 18A-18D illustrate various embodiments of the three-dimensional printed metal coating retention layer;
Figures 19A-19B illustrate portions of various embodiments of the three-dimensional printed metal coating retention layer;
Figure 20 illustrates a cross sectional view of the three-dimensional printed retention layers shown in Figure 19A-19B;
Figure 21 is a block diagram of a generalized system 1200 for additive manufacturing a portion of the esthetic dental crown;
Figure 22 is a block diagram of a generalized manufacturing process for a portion of the esthetic dental crown.
Figure 23 is a high-level flow chart of an exemplary manufacturing process for a portion of the esthetic dental crown;
Figure 24 is a high-level flow chart of an exemplary additive manufacturing for a portion of the esthetic dental crown and; and
Figure 25 is a schematic front view of an exemplary computing device 1600.

### Detailed Description

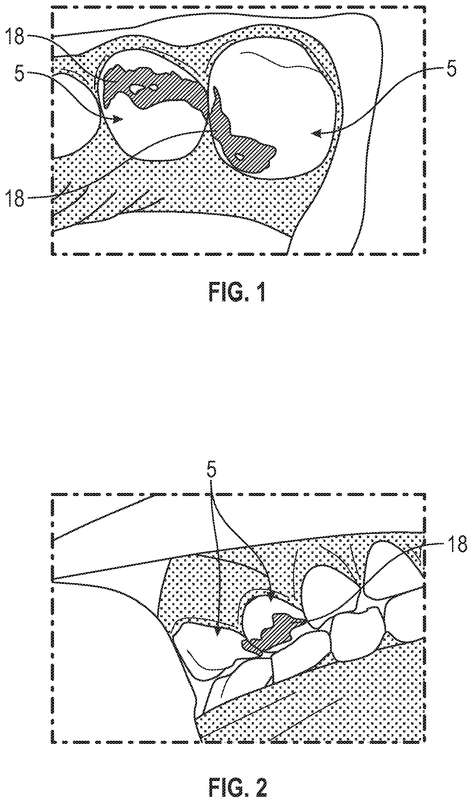

There has been a long-standing need for both temporary and permanent esthetic metal crowns for dental patients. Traditionally, dental patients have received dental crowns made from stainless steel because they are very durable and provide reliable restorations for the patient's tooth. However, stainless steel crowns have an unattractive appearance. Thus, there is a need for stainless steel dental crowns that have a more natural look with preferably a tooth-like color. Attempts have been made using resins, such as polyesters, epoxies, acrylics, and high-density polyethylene, to form an esthetically pleasing appearance on the outside of the crown. But, as illustrated by Figures 1 and 2, as these crowns 5 contact other teeth or dental work, as well as food items placed in the mouth, the outside coatings tend to be sheared off because of this contact and the resultant forces of occlusion, which exposes the stainless-steel layer 18 underneath, resulting in an unattractive appearance.

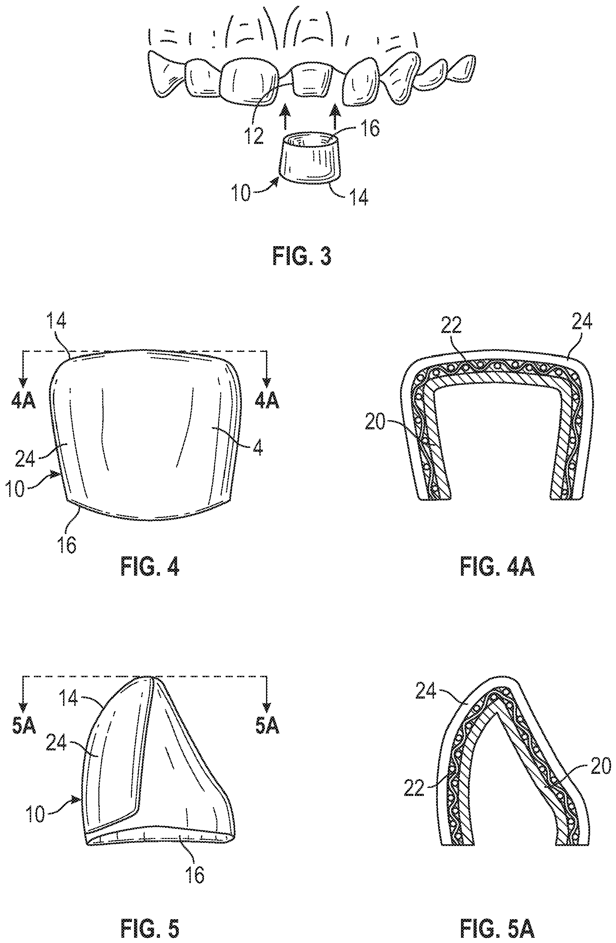

Figures 3-5 illustrate exemplary examples of the esthetic dental crown of the present invention. The dental crown 10 has portions which are manufactured by three-dimensional printing. Dental crown 10 is being shown in Figure 3 as it is being placed in the mouth to cover a prepared tooth 12. The prepared tooth 12 is shown as having its surface ground away sufficiently for the placement of the crown 10 thereon.

The scale of the teeth shown and the crown 10 to be placed thereon is for ease of illustration and should not be considered to be at the correct scale. Furthermore, the portion of the tooth 12, which has been ground away, is also for illustration purposes only.

Figure 4 and 4A are convenient for illustrating the various layers that are used to create a laminate used in the dental crown 10. The dental crown has an occlusal surface 14 and an open end 16 opposite the occlusal surface 14 for receiving the prepared tooth 12. The dental crown is shaped to resemble the original tooth it replaces, and the open end 16 is for placement over the prepared tooth 12. It is sized to fit comfortably over the portion of the tooth 12 on which the dental procedure is being performed. The crown is trimmed so that the bottom edge of the crown meets the gum line in a comfortable manner approximating the placement of the tooth when the crown 10 is applied. The crowns 10 are manufactured in various size and shapes to fit different types of teeth. The crown 10 is malleable so it can be crimped around the base of the tooth and shaped on the occlusal surface to provide a comfortable bite with the opposing tooth. However, the coating 24 is retained on the crown 10 during this crimping and shaping steps. Proper tooth preparation includes removing all caries and proper shaping the remaining natural tooth to receive the dental crown 10.

The dental crown 10 has a metal layer or foil 20, shown as a metal shell. The metal for the shell 20 is preferably stainless steel, but also could be aluminum, tin, silver, gold and any alloys thereof. The metal layer is preferably a continuous layer and nonporous. This is to prevent the coating material from seeping into the interior of the crown, which might interfere with the crown preparation and placement. The dental crown 10 has a coating retention layer 22. The retention layer 22 is preferably stainless steel, but also could be aluminum, tin, silver, gold and any alloys thereof. The shell 20 and retention layer 22 may be both manufactured by three-dimensional printing, as described in more detail below. Alternatively, just the retention layer 22 may be manufactured by three-dimensional printing. With three-dimensional printing manufacturing process, the retention layer 22 can be designed with features (such as interstitial regions described below) to enhance the retention of the polymer coating; such retention layer features may be difficult or impossible to fabrication with typical manufacturing processes that are not additive manufacturing processes.

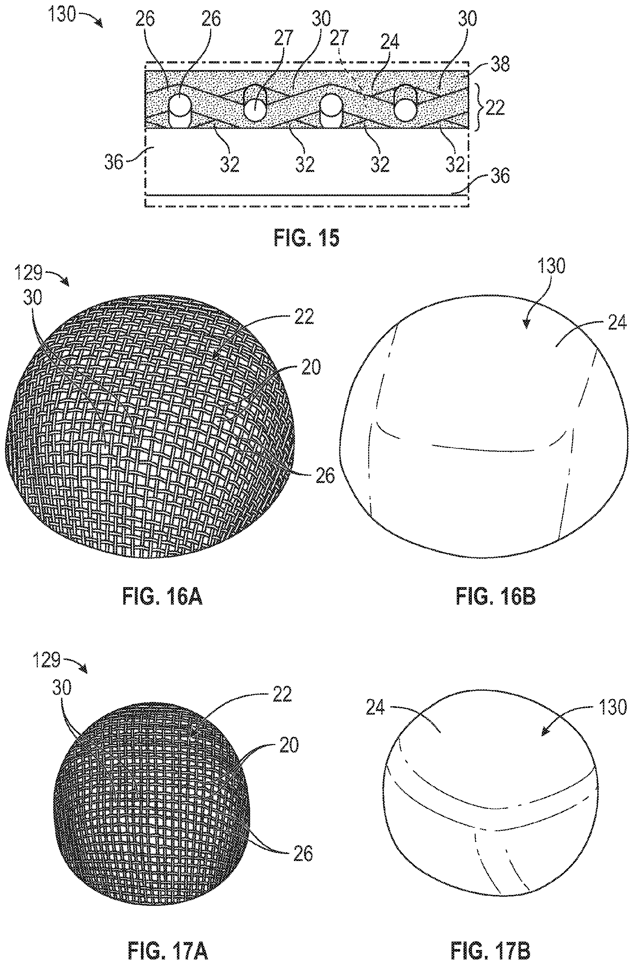

The retention layer 22 keeps the coating 24 highly retained on the metal shell 20, even after long periods of use. Due to the mechanical structure of the retention layer, the coating 24 is strongly adhered to the metal shell 20 by the physical interaction of the cured coating layer with the retention layer, as described in more detail below relative to Figures 15 through 19. When the dental crown 10 is shaped and crimped prior to placement, the esthetic coating layer 24 does not delaminate or sheer off. Likewise, as the dental crown 10 receives various occlusal forces from the opposing teeth or food, the esthetic coating layer 24 does not delaminate or shear off from the crown 10.

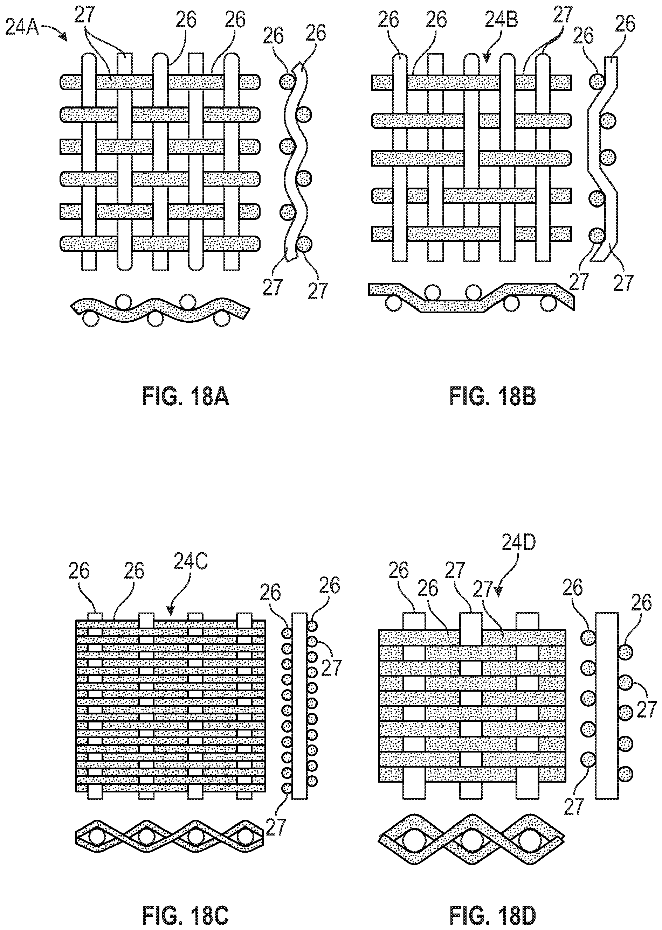

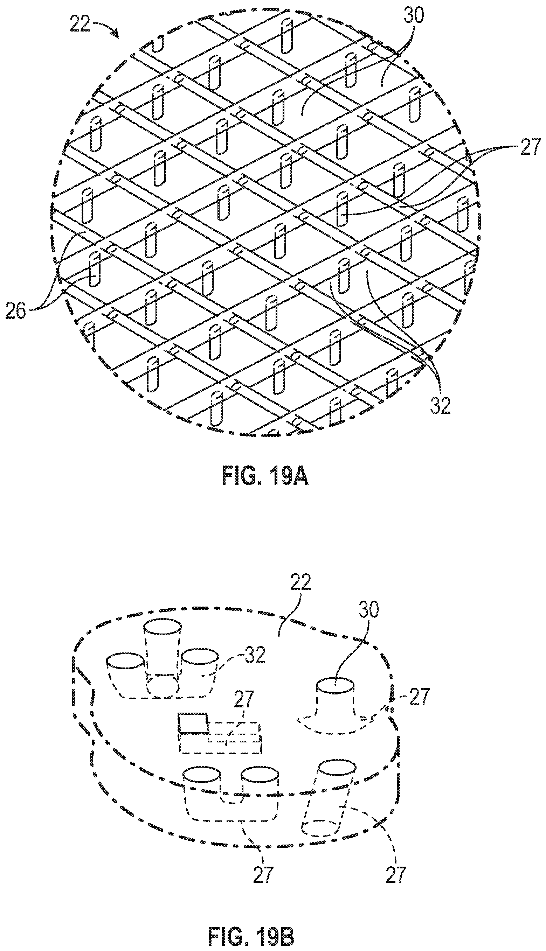

In one exemplary embodiment, the three dimensionally printed coating retention layer 22 is made to resemble a mesh of intermingled, elongated metal strands 26, printed into a variety of patterns. Examples of some patterns are illustrated in Figures 18A-D. Alternatively, the metal strands 26 may be printed in a three-dimensional design that simulates a nonwoven mesh. While three-dimensional printing affords the construction of nearly any surface structure for improving the retention of the coating layer, it has been found that in some embodiments a three-dimensional printed woven mesh structure provides exceptional strength and structural integrity over the life of the dental crown. The open spaces between adjacent metal strands 26 create apertures 30 within the coating retention layer 22. In another alternative embodiment, the three dimensionally printed coating retention layer 22 includes regular or irregular pattern of protrusions extending outward from the layer 22. Examples of such protrusions are illustrated in Figures 19A-B. The open spaces between adjacent protrusions extending from the layer 22 create apertures 30 within the coating retention layer 22. In another alternative embodiment, the three dimensionally printed coating retention layer 22 includes channels and cavities into the layer 22, which have at least one or more openings on a first side of retention layer 22, but do not pass completely through layer 22, as shown in Figure 19C. The channels and cavities are created during the three-dimensional printing of the layer 22. These apertures 30 a128nd interstitial regions 32 formed within the coating retention layer 22 function to enhance retention of the polymeric coating layer.

Figure 4 shows a molar crown 10. Figure 5 shows an eyetooth crown 10. However, it is understood that the present invention is applicable to both anterior and posterior crowns as well. The present invention provides a dental crown 10 that may be suitable for all types of crowns that could be used by a prospective dental patient, which are long lasting.

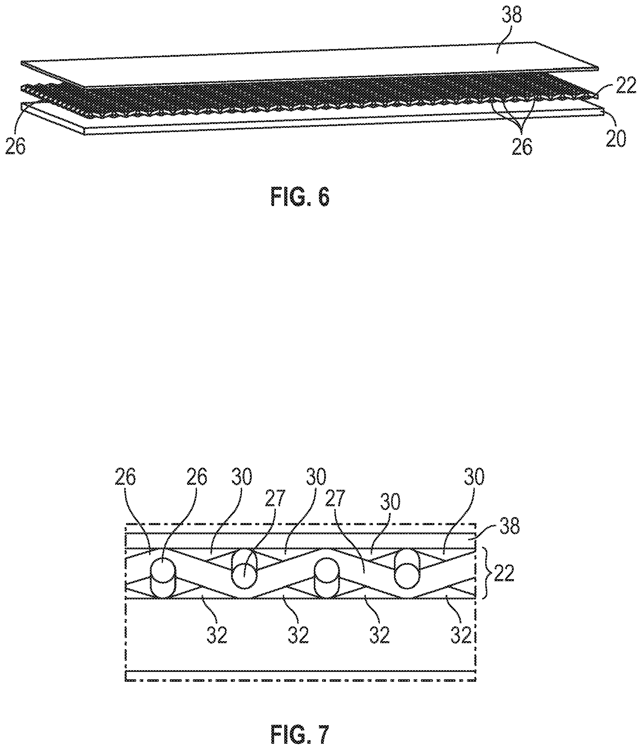

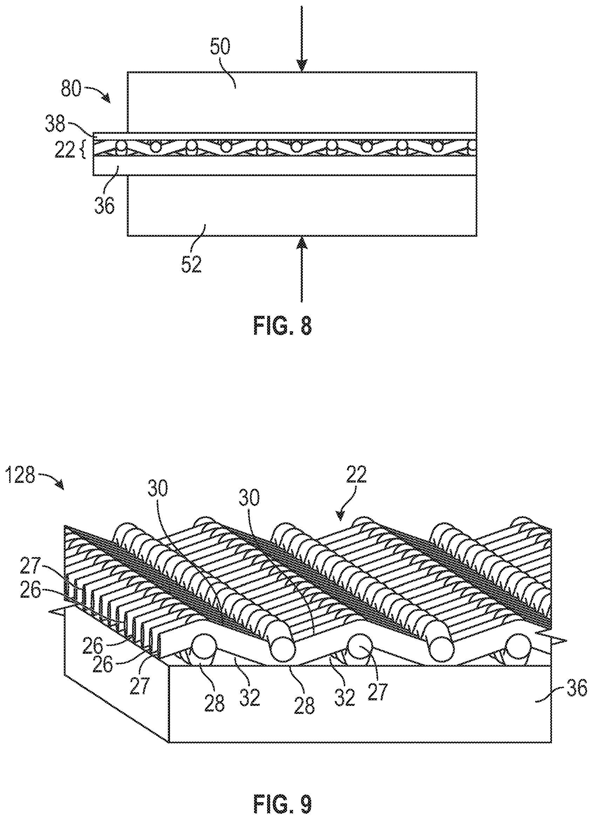

In one exemplary embodiment the dental crown 10 of the present invention is formed from a laminate construction that includes the three-dimensional printed coating retention layer 22. Figure 6 is convenient for illustrating the various layers used for making the laminate construction. A metal layer or foil 20 is brought into contact with a coating retention layer 22. A separator sheet 38 is brought into contact with the coating retention layer 22. A stack 80 of these three layers is then heated in a furnace while being forced together in a press, as illustrated in Figure 8 and discussed more below, to bond the metal layer 20 and coating retention layer 22. Thereafter, the separator sheet 38 is removed, and thus a laminate for preparation of a dental blank is created.

Figure 7 shows a magnified view of the metal layer 20 and coating retention layer 22 prior to this diffusion bonding process and Figure 9 shows a magnified view after the diffusion bonding process.

As illustrated in Figure 7 and 9, a plurality of interstitial regions 32 are created proximate to the interface between the metal layer 20 and adjacent coating retention layer 22. These open spaces provide regions for conveniently receiving the polymeric composition 24, when it is applied over the coating retention layer 22, described in more detail below. The interstitial regions 32 underlie at least a portion of the metal strands 26, but ideally underlie the majority of the metal strands 26. Metal strands 26 act as coating retention elements 27.

One exemplary embodiment for diffusion bonding the metal layer 20 to the coating retention layer 22 is shown in Figure 8. The stack 80 of metal layer 20, retention layer 22, and separator sheet 38 put into a hot press furnace having two opposing plates 50, 52. The stack 80 is heated by the furnace and the plates 50 and 52 apply pressure. The time and temperature are selected to allow the metal layers 20, 22 to diffuse into each other at the points of contact, but to still maintain the interstitial regions 32. For example, if the metal layer 20 is made of stainless steel and the retention layer 22 is made of stainless steel, the furnace may be heated within a range of 300 to 900°C. Other metals, temperatures, pressures, and times may be selected as known by one skilled in the art.

Alternatively, other bonding processes may be used, other than diffusion bonding. For instance, welding or brazing may be used to bond the three-dimensional printed coating retention layer 22 to the metal base layer 20, while still maintaining the interstitial regions 32 between the two layers.

Figure 9 shows a magnified picture of the retention layer 22 and the metal base layer 20 after the diffusion bonding step. As illustrated, the portion of the metal strands 26 adjacent to the metal base layer 20 have melted with the metal base layer to create bonded areas 28. Adjacent the top surface of the metal base layer 20 and underlying the metal strands 26 are the interstitial regions 32.

Instead of diffusion bonding or other bonding processes, three-dimensional printing processes may be used to integrally form the layer 20 and retention layer 22 during one or more three-dimensional printing process. During such printing processes powder or liquid base material is built into a solid object. One preferred method of three-dimensional printing of the layers 20, 22 is using powder bed fusion. Presently, a laser-based process (referred to in the literature as selective laser sintering, selective laser melting, direct metal laser sintering and others) and electron beam melting may be used for such powder bed fusion.

With a laser based process, a high-powered laser beam is focused onto a bed of powdered metal where thin solid layers (10-120 µm) are fused until the 3D object is built. The entire fabrication chamber is kept in an inert environment such as purified nitrogen or argon. The chamber may optionally be heated above room temperature. Depending on the amount of energy applied by the laser beam, the powder may be caused to sinter together, creating a slightly porous final article, or melt completely, creating a completely dense or almost completely dense final article. Optional post print heat treatments can be used to alter the microstructure of the printed article, optionally with the addition of pressure, as in a hot isostatic pressure apparatus, which can densify the printed article.

Instead of using a laser beam to melt or sinter the powder, with the electron beam melting technologies, a focused electron beam is used to selectively melt layers of powder (50-100 µm) in vacuum. Also, while building the part, an elevated temperature of close to the melting point of the material being processes is maintained in the chamber to reduce the residual stresses. Initially, a tungsten or other filament is heated over 3000 °C, which causes electrons to be emitted, and subsequently, potential difference between a cathode and an anode causes the electrons to accelerate. The electrons are focused and detected using magnetic coils to form a narrow high energy beam that attacks the surface of the powder. Eventually, the kinetic energy transferred through friction creates the heat that is necessary to melt the metal powder. The main differences between the different powder bed fusion technologies are the operational parameters such as melting temperature, energy source, power, laser/electron beam absorption/reflections coefficients, thermal conductivity, chamber conditions, temperature reached, along with other parameters such layer thickness, build orientation and grain size, which may be optimized by one skilled in the art. The processes describe above for additive manufacturing of metal objects are described only for non-limiting illustrative purposes as examples of processes that may be used to print embodiments of the present disclosure. It is understood that other methods of three-dimensionally printing metal and metal composite objects may be used to print the coating retention layer 22 of the present disclosure.

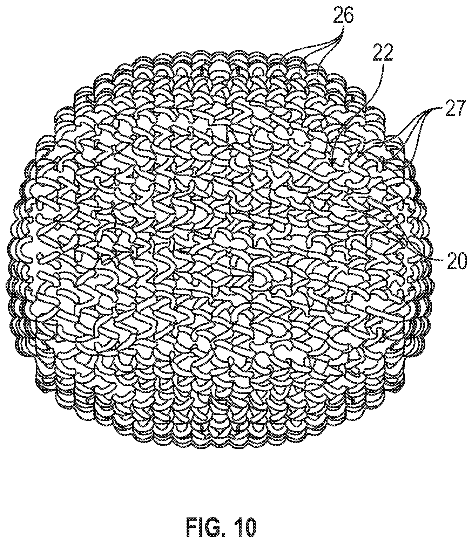

Figure 10 illustrates a magnified picture of the layers after the three-dimensional printing process. A plurality of twisted metal strands 26 in the coating retention layer 22 are additive printed with the base metal layer 20 in areas 28. Between the metal strands 26 are apertures 30. In one embodiment, the coating retention layer 22 is selected so that the plurality of apertures 30 contribute 10 to 60 percent of the total area of the coating retention layer 22. In another embodiment, the coating retention layer 22 is selected so that the plurality of apertures 30 contribute 30 to 60 percent of the total area of the coating retention layer 22. In one example, a three-dimensionally printed coating retention layer 22 replicates a size 80 mesh with a 4-mil (94 micrometer diameter) wire gauge provides 46% area of apertures or open area. The number of apertures 30 may be optimized to allow enough open area for the composition 24 to sufficiently bond to the metal layer 20 and to flow into the interstitial regions 32 for additional bonding areas and around the metal strands 26. The number of apertures 30 may also be optimized to provide enough metal strands 26 to sufficiently bond with the metal layer 20. The gauge of the metal strands 26 may also be optimized, designed and three-dimensionally to sufficiently bond with the metal layer 20.

For three-dimensional metal printing or additive printing, the dental crown of the present invention, cobalt chrome (Co-Cr) and titanium (Ti) are the most commonly used alloys. The metal powder of Co-Cr also typically contains molybdenum, , silicon, iron, manganese, nickel and carbon. The metal powders used in three-dimensional printing are a mixture of particles with sizes ranging between 10 and 50 µm. In some embodiments, the metal powder may a stainless-steel alloy powder composition, and particularly, may be a 17-4PH alloy steel powder. The standard 17-4PH alloy composition includes the following approximate weight percents: Cr=15.5-17.5%, Ni=3.5-4.5%, Cu=3.5-4.5%, Nb+Ta=0.15-0.45%, Si=0-1%, Mn=0-1%, P=0-0.04, C=0.07% max, and Fe balance. The 17-4PH alloy delivers the corrosion resistance of a 304 austenitic stainless steel, yet is as strong as 420 martensitic stainless. The 17-4 PH (US designation) corresponds to 1.4542 European designation. An important characteristic of the 17-4 PH powder material in conventional use is that it can be post-hardened by precipitation hardening ("PH") to significantly increase the hardness. One supplier of commercially available 17-4PH stainless steel powder; 090<22µm, is Sandvik Osprey Ltd., of Neath, UK.

In one embodiment, layers 20 and 22 are three-dimensionally printed as a unitary part in the final or near-final shape of a dental crown, such as represented by Figures 4, 5 (not including layer 24), Figure 10, and Figures 16A and 17A. In another embodiment, layers 20 and 22 are three-dimensionally printed as a unitary part in a sheet or flat configuration and later formed into a dental crown by deep drawing the blank. In yet another embodiment, retention layer 22 alone is three-dimensionally printed and then bonded to layer 20 as described above to form a sheet or flat laminate construction. In the cases where the two layers 20, 22 are first formed as unitary or bonded sheet, a dental blank is created and then formed into a dental crown by deep drawing the blank with a series of forming dies. One exemplary process for deep drawing is according to the process standard DIN 8585-3: Manufacturing processes forming under tensile conditions - Part 3.

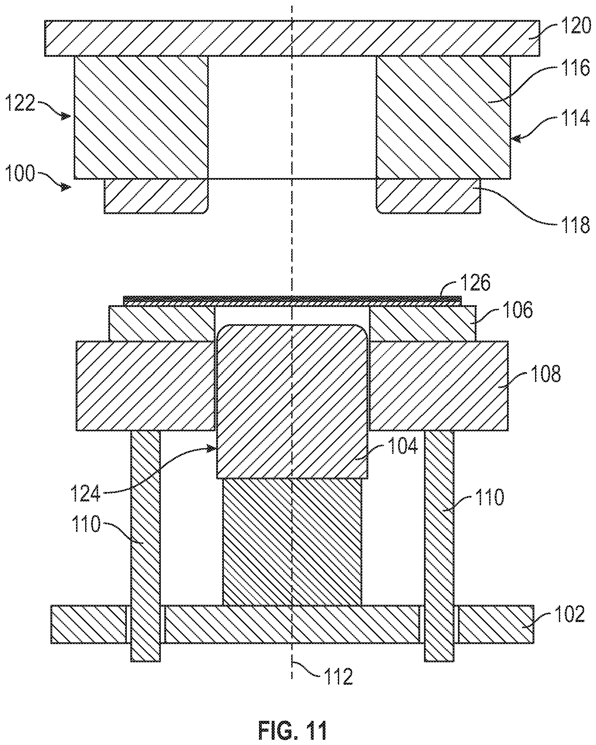

In one exemplary embodiment, a deep-drawing die is illustrated schematically in Figures 11 to 14, which is convenient for illustrating the method step for converting the dental blank into a dental crown 10.

The deep-drawing die set 100 includes a base plate 102, a drawing punch 104 arranged stationary on the upper side of the base plate 102, and a sheet-metal holder 106 which surrounds the drawing punch 104 in a ring shape and is arranged on a supporting plate 108 which likewise surrounds the drawing punch 104 in a ring shape and is borne by spindle sleeves 110 which can be moved vertically be means of a hydraulic moving device ( not illustrated) so that the supporting plate 108 can be moved with the sheet metal holder 106 arranged thereon along the vertical direction drawing 112.

The deep-drawing die set 100 also includes a drawing member 114 which is arranged above the drawing punch 104 and the sheet metal holder 106 and comprises, for its part, a ring-shaped drawing ring support 116 and a drawing ring 118 held on its underside.

The drawing ring support 116 is held at its upper side on a holding plate 120 which can be moved by means of a hydraulic moving device (not illustrated) along the direction of drawing 112 relative to the drawing punch 104 and the sheet metal holder 106.

The drawing member 114 forms the first deep-drawing die part 122 of the deep-drawing die set 100; the drawing punch 104 forms the second deep-drawing die part 124 of the deep-drawing die set 100.

A first deep-drawing process is carried out as follows with the deep-drawing die set 100 described above.

First, the drawing member 114 and the sheet metal holder 106 are displaced into their respective upper starting positions by means of the respective hydraulic moving devices (not illustrated).

In the upper starting position of the sheet metal holder 106, the essentially flat upper side of the sheet metal holder 106, the essentially flat upper side of the sheet metal holder 106 is arranged above the upper side of the drawing punch 104.

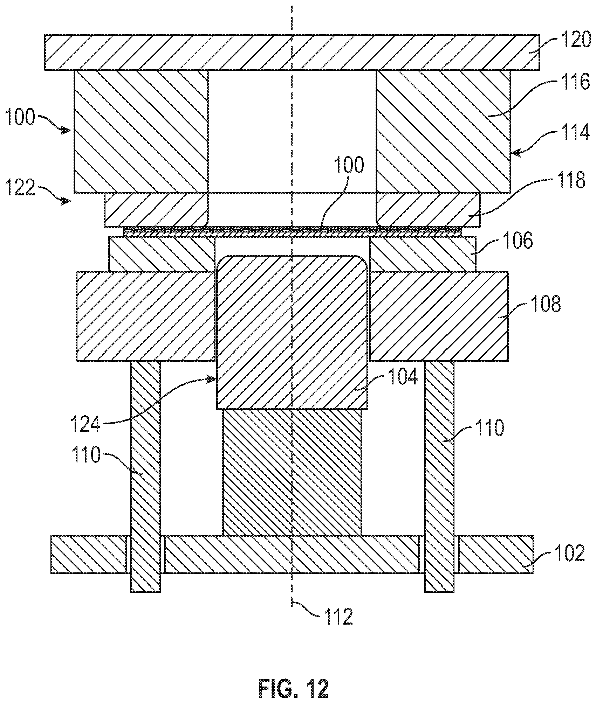

In this position, the dental blank 126, from which the drawn part is intended to be produced, is inserted into the deep-drawing die set 100 such that the edge of the blank 126 rests on the sheet metal 106, as illustrated in Figure 12.

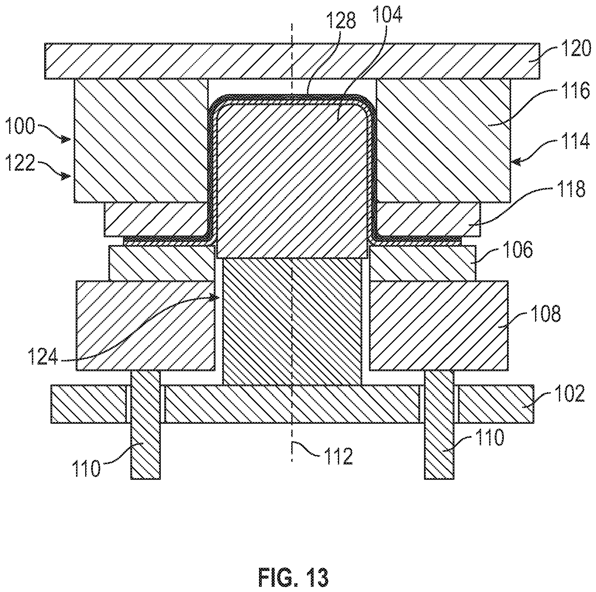

Subsequently, the deep-drawing die set 100 is closed in that the drawing member is displaced by means of the hydraulic moving device (not illustrated) downwards out of its upper starting position to such an extent along the direction of drawing 112 until the underside of the drawing ring 118 on the upper side of the blank 126 and the edge of the blank 126 is clamped between the drawing ring 118 and the sheet metal holder 106, as illustrated in Figure 13.

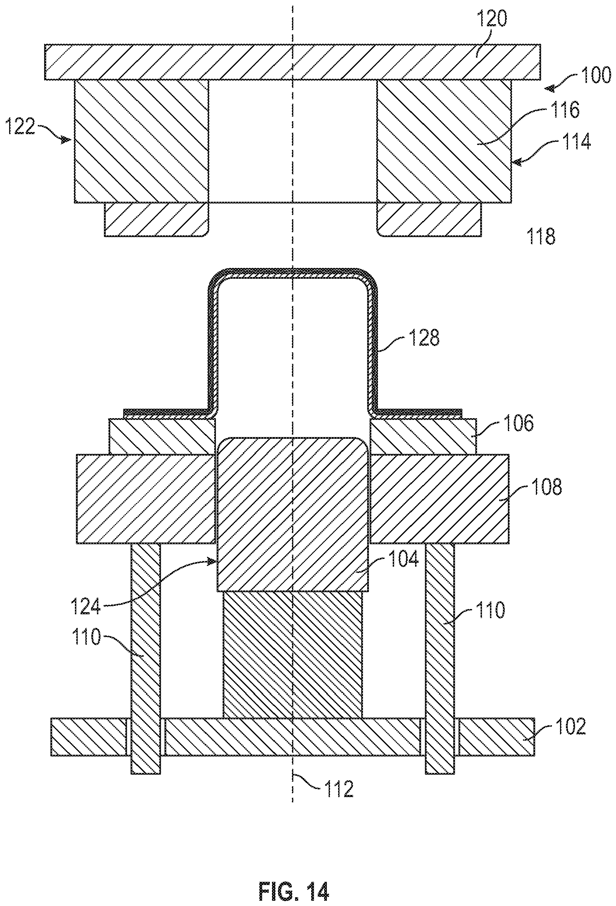

In the subsequent method step, the blank 126 is formed into a drawn part 128 in that the spindle sleeves 110 with the supporting plate 108 arranged thereon and the sheet metal holder 106 as well as the drawing member 114 are moved downwards by means of the hydraulic moving device (not illustrated) along the direction of drawing 112 relative to the drawing punch 104 by the drawing depth, wherein the blank 126 held securely at its edge between the drawing ring 118 and the sheet metal holder 106 fits closely along the outer contours of the drawing ring 118 and the drawing punch 104, as illustrated in Figure 14.

Once the desired drawing depth for the first deep-drawing process is reached, the spindle sleeves 110 are moved back into their upper starting position with the supporting plate 108 arranged thereon and the sheet metal holder 106 and the deep-drawing die set 100 is opened in that the drawing member 114 is moved further along the direction of drawing 112 upwards into its upper starting position, as illustrated in Figure 15.

As a result, the drawn part 128 formed during the first deep-drawing process is accessible from outside the deep-drawing die set 100 and can be removed from it. There are often successive deep drawing die sets that continue to form the drawn part 128 to the final desired dimensions. The drawn part 128 may then be converted into a dental crown 10 of the present invention by trimming the excess flange around the portion that contacted the sheet metal holder 106.

In one embodiment, after the three-dimensionally printed retention layer 22 and metal base layer 20 are bonded, they may be coated with a polymeric composition to form a dental blank 130. Figure 15 illustrates a cross section of an area of the finished dental blank 130. The polymeric composition is applied over the top of the retention layer 22, into the apertures 30 and interstitial regions 32, around the metal strands 26 and in contact with the metal base layer 20 to form a coating 24. Afterwards, the coating 24 may be hardened to mechanically bond the coating to the metal base layer 20, especially via retention layer 22. The hardened composition in the interstitial regions 32 adjacent the metal strands 26 and metal layer 20 assist in adhering the coating to the base layer. After hardening, the coating is mechanically bonded to the metal layer 20 by the coating being locked into place within interstitial regions 32 and around the metal strands 26. However, the coating, mesh, and base combination are still flexible enough to be shaped and crimped easily by a dentist. The retention layer 22 also provides strength and flexibility.

Optionally, to increase the bonding of the coating 24 to the retention layer 22 and to metal base layer 20, both layers may be sandblasted or otherwise physically or chemically treated to prime the surface prior to the coating process.

One way to apply the esthetic layer 24 is to electrostatically apply a powder to the metal retention layer 22 and base layer 20. One example of suitable powder is ALESTA epoxy-polyester hybrid, which is commercially available from Axalta Coating Systems based in Houston, Texas.

The hardenable compositions of the present disclosure are typically hardenable due to the presence of a polymerizable component. As used herein, the term "hardenable" refers to a material that can be cured or solidified, e.g., by heating to remove solvent, heating to cause polymerization, chemical crosslinking, radiation-induced polymerization or crosslinking, or the like.

In some embodiments, the compositions can be hardened (e.g., polymerized by heat, conventional photopolymerization and/or chemical polymerization techniques) after it has been applied to the surface of a dental article.

In certain embodiments, the compositions are photopolymerizable, i.e., the compositions contain a photo initiator system that upon irradiation with actinic radiation initiates the polymerization (or hardening) of the composition. In other embodiments, the compositions are chemically hardenable, i.e., the compositions contain a chemical initiator (i.e., initiator system) that can polymerize, cure, or otherwise harden the composition without dependence on irradiation with actinic radiation. Such chemically hardenable compositions are sometimes referred to as "self-cure" compositions.

In other embodiments, the compositions are thermally polymerizable, i.e., the compositions contain a thermal initiator system that upon heating or other application of thermal energy initiates the polymerization (or hardening) of the composition.

As used herein, the term "(meth)acrylate" is a shorthand reference to acrylate, methacrylate, or combinations thereof, and "(meth)acrylic" is a shorthand reference to acrylic, methacrylic, or combinations thereof. As used herein, "(meth)acrylate-functional compounds" are compounds that include, among other things, a (meth)acrylate moiety.

The polymerizable component typically comprises one or more ethylenically unsaturated compounds, with or without acid functionality. Examples of useful ethylenically unsaturated compounds include acrylic acid esters, methacrylic acid esters, hydroxy-functional acrylic acid esters, hydroxy-functional methacrylic acid esters, and combinations thereof. The polymerizable component may comprise one or more ethylenically unsaturated compounds, with or without acid functionality that is phosphorylated, such as a phosphorylated methacrylate. In some embodiments, the polymeric composition comprises a polymerizable component is selected from the group consisting of phenoxyethyl methacrylate, urethane dimethacrylate, polyethylene glycol methacrylate, polypropylene glycol methacrylate, triethyleneglycol dimethacrylate, the diglycidyl methacrylate of bisphenol A, and combinations thereof.

One suitable coating is taught as microparticle coating in U.S. Patent No 9,044,292, "Dental Articles include a Ceramic and Microparticle Coating, and Method of Making the Same".

In one embodiment, the composition is a polymer or copolymer chosen from epoxy, polyester, and hybrids thereof. In another embodiment, the composition may be a thermoplastic polymer. If so, the thermoplastic polymer could be from polyetheretherketone (PEEK), polyaryletherketone (PAEK), polyphenolsulfones, polyethersulfones, polyacrylamide, PTFE or combinations thereof.

Preferably, the coating composition is retained on the metal shell with a minimum bond strength of at least 5 MPa. This is to provide a dental crown that will endure the various forces applied to it while the patient is chewing.

In one preferred embodiment, the metal shell has a thickness in the range of 50 to 250 micrometers. In a more preferred embodiment, the metal shell 20 has a thickness in the range of 50 to 150 micrometers. In another preferred embodiment, the coating retention layer 22 has a thickness in the range of 50 to 125 micrometers. Overall, the dental crown 10 has a thickness in the range of 50 to 700 micrometers. Such preferred thickness ranges provide flexibility and durability.

Figures 16A and 17A show examples of dental crowns 129 after the deep drawing process step described above, but prior to the coating process step. Figures 16B and 17B show examples of dental crowns 130 after both the deep drawing process and coating process steps. Typically, the top or occlusal surface of the dental crown 10 will include grooves, indentations and or dimples (not shown), similar to normal dentition. The occlusal surface is shaped into the metal base layer 20 as part of the deep drawing process described in Figures 11-14, prior to the bonding and coating processes described above. In an alternative embodiment, the uncoated dental crown 129 of Figures 16A and 17A may be made entirely from an additive manufacturing process, where layers 20 and 22 are integrally formed during the three-dimensional printing process of a dental crown.

Figures 18A-D illustrate several examples of exemplary three-dimensionally printed retention layer 22 having different structures that resemble various wire mesh weave styles. Figure 18A illustrates a plain weave style. For example, the three-dimensionally printed mesh layer 22 shown in Figures 16A and 7A have a plain weave style. Figure 18B illustrates a twill square weave style. Figure 18C illustrates a reverse plain Dutch weave style. Figure 18D illustrates a plain Dutch weave style. The coating retention layer 22 in Figures 18A and 18B has apertures 30 that comprise between 40 and 50 percent of the area of the coating retention layers. The coating retention layer 22 in Figures 18C and 18D has apertures 30 that comprise between 1 and 10 percent of the area of the coating retention layers. In some embodiments, it has been found that a three-dimensionally printed structure that resembles a wire mesh provides three important properties for a coated dental crown: (1) the mesh-like structure of retention layer 22 is strong enough in the z-direction to endure the crushing forces experience by teeth, (2) it is very flexible and can easily be formed into a crown shape without significant loss of strength or structural (x-y) integrity, and (3) it provides adequate interstitial regions 32 to enhance the retention of coating 24.

Figure 19A and 19B illustrates portions of example coating retention layers 22 useful for the dental crown 10 of the invention, each having different configurations of coating retention elements 27. In Figure 19A, coating retention element 27 are shown as a cross hatch of intersecting solid pipes and supports extending from the continuous layer 20 and supporting the pipes. In this example embodiment, apertures 30 are formed between the coating retention elements 27, and interstitial regions 32 are formed between the coating retention elements 27 and the layer 22. In Figure 19B, coating retention elements 27 are formed within the layer 22, and may be a variety of configurations. For instance, as shown, coating retention elements could be mushroom-shaped, slanted cylinders, handle-shaped, etc. Any configuration is acceptable, so long as the coating 24 may flow into the apertures 30 and form an element which assists in boding the coating to the metal layer 22.

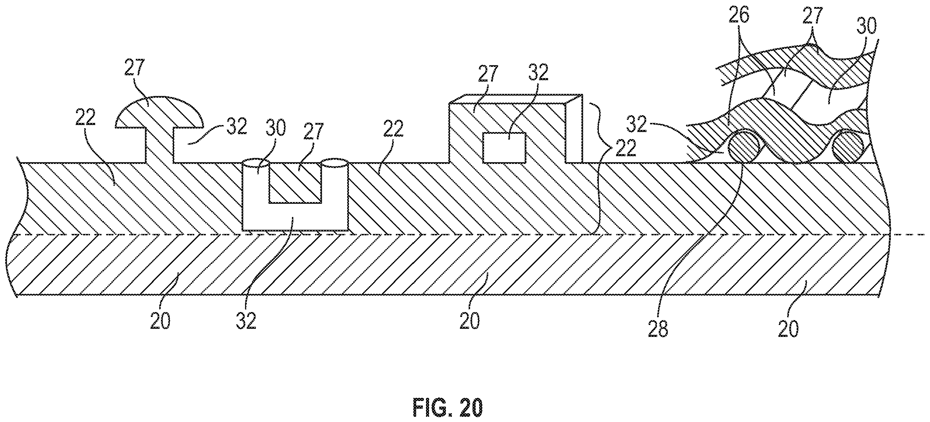

Figure 20 illustrates a cross sectional view of one embodiment of coating retention layer 22 having several different coating retention elements 27, as illustrated in the prior Figures. For instance, one coating retention element 27 includes a mushroom shaped element 27 having undercuts serving as an interstitial region 32. Another coating retention element 27 includes a portion 27 adjacent a handle-shaped pipe having two apertures 30. Another coating retention element 27 is a handle 27 extending away from the metal layer 20 with aperture 32. Yet another coating retention element 27 includes metal strands 26. The coating layer 24 (not shown) will be in contact with all of the retention elements and mechanically strongly adhere the coating to the layer 20.

Replacing a tooth with a crown is often considered a cosmetic procedure rather than a medical procedure, as it improves the appearance of a patient's teeth.

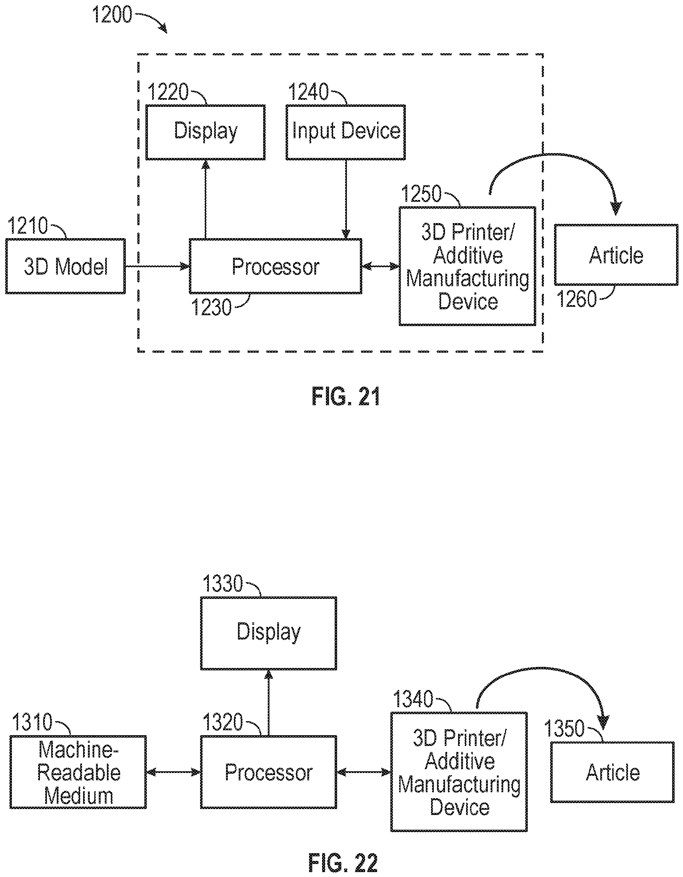

Figures 21- 25 are convenient for describing an exemplary process of three-dimensional printing or additive manufacturing that may be used to integrally form the coating retention layer 22 and metal layer or shell 20 of the esthetic dental crown 10 to form one article or to just form the coating retention layer 22 by itself.

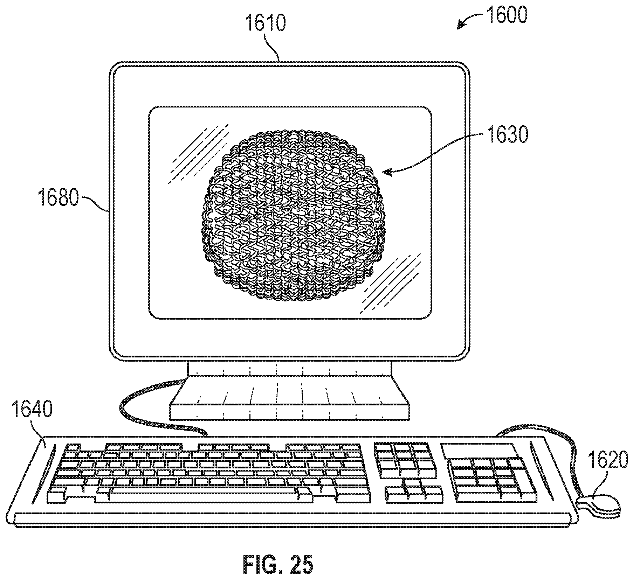

First, in referring to Figure 25, a computing device 1600 often includes an internal processor 1680, a display 1610 (e.g., a monitor), and one or more input devices such as a keyboard 1640 and a mouse 1620. In Figure 25, a metal coating retention layer 22 and layer 20 are one integral layer and shown as an article on the display 1610.

Now, referring to Figure 21, in certain embodiments, the present disclosure provides a system 1200. The system 1200 comprises a display 1220 that displays a 3D model 1210 of an article (layer 20 and coating retention layer 22 integrated as one article or the coating retention layer 22 by itself); and one or more processors 1230 that, in response to the 3D model 1210 selected by a user, cause a 3D printer / additive manufacturing device 1250 to create a physical object of the article 1260 (layer 20 and coating retention layer 22). Often, an input device 1240 (e.g., keyboard and/or mouse) is employed with the display 1220 and the at least one processor 1230, particularly for the user to select the 3D model 1210.

Referring to Figure 22, a processor 1320 (or more than one processor) is in communication with each of a machine-readable medium 1310 (e.g., a non-transitory medium), a 3D printer / additive manufacturing device 1340, and optionally a display 1330 for viewing by a user. The 3D printer / additive manufacturing device 1340 is configured to make one or more articles 1350 (layer 20 and coating retention layer 22) based on instructions from the processor 1320 providing data representing a 3D model of the article 1350 (layer 20 and coating retention layer 22) from the machine-readable medium 1310.

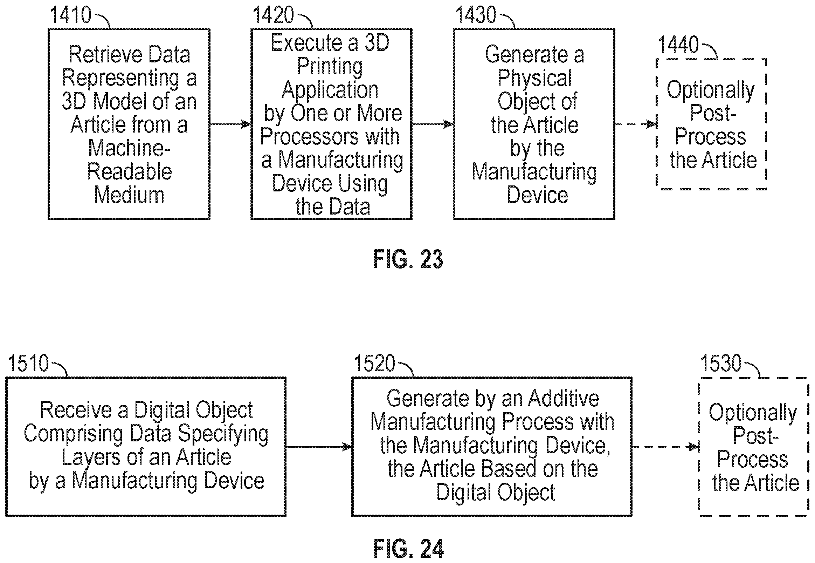

Referring to Figure 23, for example and without limitation, an additive manufacturing method comprises retrieving 1410, from a (e.g., non-transitory) machine-readable medium, data representing a 3D model of an article according to at least one embodiment of the present disclosure (layer 20 and coating retention layer 22). The method further includes executing 1420, by one or more processors, an additive manufacturing application interfacing with a manufacturing device using the data; and generating 1430, by the manufacturing device, a physical object of the article. One or more various optional post-processing steps 1440 may be undertaken, for instance and without limitation, support removal, heat treatment, polishing, and threading of pilot holes. For example and without limitation, an additive manufacturing method comprises retrieving, from a (e.g., non-transitory) machine-readable medium, data representing a 3D model of a burner body according to at least one embodiment of the present disclosure. The method further comprises executing, by one or more processors, an additive manufacturing application interfacing with a manufacturing device using the data; and generating, by the manufacturing device, a physical object of the layers 20, 22. The additive manufacturing equipment can selectively bond the powder particles (e.g., metallic particles) according to a set of computerized design instructions to create this portion of the esthetic dental crown 10.

In certain embodiments, a method of making a portion of the esthetic dental crown 10 is provided, specifically the portion representing the layer 20 and coating retention layer 22. The method comprises receiving, by a manufacturing device having one or more processors, a digital object comprising data specifying a plurality of layers of layers 20, 22; and generating, with the manufacturing device by an additive manufacturing process, the layers 20, 22 based on the digital object. The layers 20, 22 include a mesh of intermingled, elongated metal strands 26, printed into a variety of patterns, with a number of layers of metal directly bonded to each other. Additionally, referring to Figure 24, a method of making an article (layer 20 and coating retention layer 22 as one integral layer or the coating retention layer by itself) comprises receiving 1510, by a manufacturing device having one or more processors, a digital object comprising data specifying a plurality of layers of an article; and generating 1520, with the manufacturing device by an additive manufacturing process, the article based on the digital object. Again, the article may undergo one or more steps of post-processing 1530.

### Examples

### Materials and Equipment:

1. 17-4PH stainless steel powder; 090<22µm, available from Sandvik Osprey Ltd., of Neath, UK.
2. ProX DMP 200 powder bed fusion 3D printer (3D Systems, Rock Hill, SC, USA).
3. 3M FILTEK Supreme Ultra Flowable Restorative, A2 shade, available from 3M Company, St. Paul, MN, USA.
4. RAL 9001 Cream - Polyester TGIC Weather Resistant Powder Coating, available from Powder Buy the Pound, Nolensville, TN, USA.
5. 3M ELIPAR DeepCure-S LED Curing Light, available from 3M Company, St. Paul, MN, USA

### Example 1: 3D Printed Stainless Steel Crown with Highly Retentive Layer

A stainless steel dental crown with a retentive surface can be 3D printed from 17-4PH stainless steel powder (D90<22µm, Sandvik Osprey, Neath, UK). The crown can be printed, for example, using a ProX DMP 200 powder bed fusion 3D printer (3D Systems, Rock Hill, SC). The crown can be printed using 30µm layer height. Table 1 shows the laser parameters that can be used for printing the crown, based on the printer manufacturer's recommendations. Where necessary, during printing, retentive surface structures can be held up using a mesh support structure, generated using ProX DMP Manufacturing software (3D Systems). This support structure can be later removed, and the crown can be cleaned ultrasonically to remove excess powder. A stainless steel dental crown with a retentive surface structures can be 3D printed as described above with retentive structures according to, for example, any one of Figures 9, 10, 16A, 17A, 18A-18D, and 19A-C.

**Table 1: Laser parameters used for printing 17-4PH stainless steel.**

| **Parameter** | **Internal parameters** | **Surface parameters** |
|---|---|---|
| Laser power (W) | 240 | 90 |
| Laser write speed (mm/s) | 2500 | 160 |
| Hatch spacing (µm) | 50 | N/A |

### Example 2: 3D Printed Stainless Steel Crown with Highly Retentive Layer and Composite Coating

The 3D printed dental crown according to Example 1 can be coated with a polymeric material to provide a more aesthetic tooth-like appearance. The 3D printed dental crown according to Example 1 can be coated with, 3M FILTEK Supreme Ultra Flowable Restorative composite material, directly extruded from a syringe (with the tip immersed in the material to prevent bubbles) so that the coating material flows into the interstitial regions of the retentive surface structures. The coating can be shaped accordingly and then light cured for 30 seconds using a 400-500 nm visible curing light device, such as, for example 3M ELIPAR DeepCure-S LED Curing Light.

### Example 3: 3D Printed Stainless Steel Crown with Highly Retentive Layer and Polyester Coating

The 3D printed dental crown according to Example 1 can be coated with a polymeric material to provide a more aesthetic tooth-like appearance. The 3D printed dental crown according to Example 1 can be dry-powder coated with an electrostatic spraying process using the following powder: RAL 9001 Cream - Polyester TGIC Weather Resistant Powder Coating. The 3D printed crown with retentive surface structures can be first washed with cleaning solution and rinsed with water prior to electrostatic coating. The electrostatic spraying process application of the powder coating ensures that the polyester coating covers the surface of the 3D printed dental crown and into the interstitial regions of the retentive surface structures. After the electrostatic spraying process application of the powder coating, the coated crown can be baked at 400°F (204°C) for 10 minutes. The final coating can be approximately 125 micrometers thick.

## Claims

1. A dental crown (10), comprising:
a metal shell (20) shaped to cover a portion of a tooth (12) of a patient, the metal shell comprising:
a continuous non-porous, metal or metal-composite layer;
a coating retention layer (22) adjacent the metal layer, wherein the coating retention layer (22) is three-dimensionally printed and comprises a plurality of coating retention elements (27), wherein the retention layer (22) comprises a plurality of interstitial regions (32) between the retention elements (27) and the adjacent metal layer, wherein a plurality of apertures (30) is formed between the plurality of retention elements, **characterized in that** the retention elements (27) of the coating retention layer (22) comprise a grid, or a mesh, comprising a plurality of elongated metal strands (26), and the interstitial regions (32) underlie at least a portion of the strands.

2. The dental crown of claim 1, further comprising a hardenable coating composition applied on the coating retention layer and continuous within the plurality of the interstitial regions and apertures to mechanically retain the coating composition to the coating retention layer of the shell.

3. The dental crown of claim 1-2, wherein the continuous non-porous metal layer is three-dimensionally printed with the retention layer.

4. The dental crown of claims 1-3, wherein a plurality of apertures between the plurality of elongated metal strands comprise 10 to 60 percent of the area of the coating retention layer.

5. The dental crown of claims 1-3, wherein the open spaces between the elongated strands comprise 30 to 40 percent of the area of the coating retention layer.

6. The dental crown of claims 1-3, wherein the coating retention layer comprises a mesh of elongated metal strands, wherein the metal strands comprise a plurality of coating retention elements and the interstitial regions underlie at least a portion of the strands.

7. The dental crown of claims 1-6, wherein the hardenable coating composition is hardened or cured by heating to remove solvent, heating to cause polymerization, chemical crosslinking, radiation-induced polymerization or crosslinking.

8. The dental crown of claims 1-7, wherein the composition comprises a polymer or copolymer chosen from epoxy, polyester, and hybrids thereof.

9. The dental crown of claims 1-7, wherein the composition comprises a thermoplastic polymer.

10. The dental crown of claim 9, wherein the composition comprises a thermoplastic polymer chosen from polyetheretherketone (PEEK), polyaryletherketone (PAEK), polyphenolsulfones, polyethersulfones, polyacrylamide, PTFE and combinations thereof.

11. The dental crown of claims 1-10, wherein the metal shell and/or the coating retention layer comprise stainless steel.

12. A method of forming a dental crown (10), comprising: three-dimensionally printing a metal shell (20) and a coating retention layer (22) to form a dental crown, wherein the coating retention layer comprises a plurality of apertures (30), wherein an interface between the metal base layer and the coating retention layer comprises a plurality of interstitial regions (32), wherein both the shell and coating retention layer comprise three-dimensional printed materials , **characterized in that** the coating retention layer comprises a mesh structure of elongated metal strands (26), and wherein the plurality of interstitial regions is between the metal strands and the base layer.

13. The method of claim 12, further comprising applying a hardenable coating composition onto the coating retention layer and continuously within the plurality of the interstitial regions and apertures.

14. A method of forming a dental crown (10), comprising:
providing a multilayer construction comprising:
a continuous, nonporous metal base layer (20);
a three-dimensionally printed coating retention layer (22) adjacent to the metal base layer, wherein the coating retention layer comprises a plurality of coating retention elements (27), wherein there are a plurality of apertures (30) between the coating retention elements, further wherein an interface between the metal base layer and the coating retention elements comprises a plurality of interstitial regions (32), **characterized in that** the coating retention elements comprise a mesh of elongate metal strands (26), wherein the plurality of apertures is between the plurality of metal strands, and wherein the plurality of interstitial regions is between the metal strands and the base layer; and
forming the multilayer construction into dental crown blank (126).

15. The method of claim 14, wherein the continuous non-porous metal layer is three-dimensionally printed with the coating retention layer.

## Patentansprüche

1. Eine Zahnkrone (10), aufweisend:
eine Metallschale (20), die geformt ist, um einen Abschnitt eines Zahns (12) eines Patienten zu bedecken, die Metallschale aufweisend:
eine durchgehende, nicht poröse Metall- oder Metallverbundschicht;
eine Beschichtungsretentionsschicht (22), angrenzend an die Metallschicht, wobei die Beschichtungsretentionsschicht (22) dreidimensional gedruckt ist und eine Mehrzahl von Beschichtungsretentionselementen (27) aufweist, wobei die Retentionsschicht (22) eine Mehrzahl von dazwischenliegenden Regionen (32) zwischen den Retentionselementen (27) und der angrenzenden Metallschicht aufweist, wobei eine Mehrzahl von Öffnungen (30) zwischen der Mehrzahl von Retentionselementen ausgebildet ist, **dadurch gekennzeichnet, dass** die Retentionselemente (27) der Beschichtungsretentionsschicht (22) ein Gitter oder ein Netz aufweisen, aufweisend eine Mehrzahl von länglichen Metallsträngen (26), und die dazwischenliegenden Regionen (32) zumindest einem Abschnitt der Stränge unterliegen.

2. Die Zahnkrone nach Anspruch 1, ferner aufweisend eine härtbare Beschichtungszusammensetzung, die auf die Beschichtungsretentionsschicht aufgebracht ist und innerhalb der Mehrzahl von dazwischenliegenden Regionen und Öffnungen durchgehend ist, um die Beschichtungszusammensetzung mechanisch an der Beschichtungsretentionsschicht der Schale zurückzuhalten.

3. Die Zahnkrone nach den Ansprüchen 1 bis 2, wobei die durchgehende, nicht poröse Metallschicht mit der Retentionsschicht dreidimensional gedruckt ist.

4. Die Zahnkrone nach den Ansprüchen 1 bis 3, wobei eine Mehrzahl von Öffnungen zwischen der Mehrzahl von länglichen Metallsträngen 10 bis 60 Prozent der Fläche der Beschichtungsretentionsschicht ausmacht.

5. Die Zahnkrone nach den Ansprüchen 1 bis 3, wobei die offenen Räume zwischen den länglichen Metallsträngen 30 bis 40 Prozent der Fläche der Beschichtungsretentionsschicht ausmachen.

6. Die Zahnkrone nach den Ansprüchen 1 bis 3, wobei die Beschichtungsretentionsschicht ein Netz aus länglichen Metallsträngen aufweist, wobei die Metallstränge eine Mehrzahl von Beschichtungsretentionselementen aufweisen und die dazwischenliegenden Regionen zumindest einem Abschnitt der Stränge unterliegen.

7. Die Zahnkrone nach den Ansprüchen 1 bis 6, wobei die härtbare Beschichtungszusammensetzung durch Erhitzen, um Lösungsmittel zu entfernen, Erhitzen, um eine Polymerisation zu verursachen, chemische Vernetzung, strahlungsinduzierte Polymerisation oder Vernetzung, gehärtet oder ausgehärtet wird.

8. Die Zahnkrone nach den Ansprüchen 1 bis 7, wobei die Zusammensetzung ein Polymer oder Copolymer aufweist, das aus Epoxid, Polyester und Hybriden davon ausgewählt ist.

9. Die Zahnkrone nach den Ansprüchen 1 bis 7, wobei die Zusammensetzung ein thermoplastisches Polymer aufweist.

10. Die Zahnkrone nach Anspruch 9, wobei die Zusammensetzung ein thermoplastisches Polymer aufweist, das aus Polyetheretherketon (PEEK), Polyaryletherketon (PAEK), Polyphenolsulfonen, Polyethersulfonen, Polyacrylamid, PTFE und Kombinationen davon ausgewählt ist.

11. Die Zahnkrone nach den Ansprüchen 1 bis 10, wobei die Metallschale und/oder die Beschichtungsretentionsschicht Edelstahl aufweisen.

12. Ein Verfahren zum Bilden einer Zahnkrone (10), aufweisend:
dreidimensionales Drucken einer Metallschale (20) und einer Beschichtungsretentionsschicht (22), um eine Zahnkrone zu bilden,
wobei die Beschichtungsretentionsschicht eine Mehrzahl von Öffnungen (30) aufweist, wobei eine Schnittstelle zwischen der Metallbasisschicht und der Beschichtungsretentionsschicht eine Mehrzahl von dazwischenliegenden Regionen (32) aufweist,
wobei sowohl die Schale als auch die Beschichtungsretentionsschicht dreidimensionale gedruckte Materialien aufweisen, **dadurch gekennzeichnet, dass** die Beschichtungsretentionsschicht eine Maschenstruktur aus länglichen Metallsträngen (26) aufweist,
und wobei die Mehrzahl von dazwischenliegenden Regionen zwischen den Metallsträngen und der Basisschicht liegt.

13. Das Verfahren nach Anspruch 12, ferner aufweisend das Aufbringen einer härtbaren Beschichtungszusammensetzung auf die Beschichtungsretentionsschicht und durchgehend innerhalb der Mehrzahl der dazwischenliegenden Regionen und Öffnungen.

14. Ein Verfahren zum Bilden einer Zahnkrone (10), aufweisend:
Bereitstellen einer Mehrfachschichtkonstruktion, aufweisend:
eine durchgehende, nicht poröse Metallbasisschicht (20);
eine dreidimensional gedruckte Beschichtungsretentionsschicht (22), angrenzend an die Metallbasisschicht,
wobei die Beschichtungsretentionsschicht eine Mehrzahl von Beschichtungsretentionselementen (27) aufweist,
wobei sich eine Mehrzahl von Öffnungen (30) zwischen den Beschichtungsretentionselementen befindet, ferner wobei eine Schnittstelle zwischen der Metallbasisschicht und den Beschichtungsretentionselementen eine Mehrzahl von dazwischenliegenden Regionen (32) aufweist, **dadurch gekennzeichnet, dass** die Beschichtungsretentionselemente ein Netz aus länglichen Metallsträngen (26) aufweisen,
wobei sich die Mehrzahl von Öffnungen zwischen der Mehrzahl von Metallsträngen befindet, und wobei sich die Mehrzahl von dazwischenliegenden Regionen zwischen den Metallsträngen und der Basisschicht befindet; und
Bilden der Mehrfachschichtkonstruktion in einen Zahnkronen-Rohling (126).

15. Das Verfahren nach Anspruch 14, wobei die durchgehende, nicht poröse Metallschicht mit der Beschichtungsretentionsschicht dreidimensional gedruckt ist.

## Revendications

1. Couronne dentaire (10), comprenant :
une coque métallique (20) profilée pour recouvrir une partie d'une dent (12) d'un patient, la coque métallique comprenant :
une couche continue, non poreuse, métallique ou composite métallique ;
une couche de retenue de revêtement (22) adjacente à la couche métallique, dans laquelle la couche de retenue de revêtement (22) est imprimée de manière tridimensionnelle et comprend une pluralité d'éléments de retenue de revêtement (27), dans laquelle la couche de retenue (22) comprend une pluralité de régions interstitielles (32) entre les éléments de retenue (27) et la couche métallique adjacente, dans laquelle une pluralité d'ouvertures (30) est formée entre la pluralité d'éléments de retenue, **caractérisée en ce que** les éléments de retenue (27) de la couche de retenue de revêtement (22) comprennent une grille, ou un maillage, comprenant une pluralité de fils métalliques allongés (26), et les régions interstitielles (32) sont sous-jacentes à au moins une partie des fils.

2. Couronne dentaire selon la revendication 1, comprenant en outre une composition de revêtement durcissable appliquée sur la couche de retenue de revêtement et continue au sein de la pluralité des régions interstitielles et des ouvertures pour retenir mécaniquement la composition de revêtement sur la couche de retenue de revêtement de la coque.

3. Couronne dentaire selon les revendications 1 à 2, dans laquelle la couche continue non poreuse métallique est imprimée de manière tridimensionnelle avec la couche de retenue.

4. Couronne dentaire selon les revendications 1 à 3, dans laquelle une pluralité d'ouvertures entre la pluralité de fils métalliques allongés comprennent 10 à 60 pour cent de l'aire de la couche de retenue de revêtement.

5. Couronne dentaire selon les revendications 1 à 3, dans laquelle les espaces ouverts entre les fils allongés comprennent 30 à 40 pour cent de l'aire de la couche de retenue de revêtement.

6. Couronne dentaire selon les revendications 1 à 3, dans laquelle la couche de retenue de revêtement comprend un maillage de fils métalliques allongés, dans laquelle les fils métalliques comprennent une pluralité d'éléments de retenue de revêtement et les régions interstitielles sont sous-jacentes à au moins une partie des fils.

7. Couronne dentaire selon les revendications 1 à 6, dans laquelle la composition de revêtement durcissable est durcie ou solidifiée par chauffage pour éliminer le solvant, chauffage pour provoquer une polymérisation, réticulation chimique, polymérisation ou réticulation induite par rayonnement.

8. Couronne dentaire selon les revendications 1 à 7, dans laquelle la composition comprend un polymère ou copolymère choisi parmi un époxy, un polyester, et des hybrides de ceux-ci.

9. Couronne dentaire selon les revendications 1 à 7, dans laquelle la composition comprend un polymère thermoplastique.

10. Couronne dentaire selon la revendication 9, dans laquelle la composition comprend un polymère thermoplastique choisi parmi une polyétheréthercétone (PEEK), une polyaryléthercétone (PAEK), des polyphénolsulfones, des polyéthersulfones, un polyacrylamide, du PTFE et des combinaisons de ceux-ci.

11. Couronne dentaire selon les revendications 1 à 10, dans laquelle la coque métallique et/ou la couche de retenue de revêtement comprennent de l'acier inoxydable.

12. Procédé de formation d'une couronne dentaire (10), comprenant :
l'impression de manière tridimensionnelle d'une coque métallique (20) et d'une couche de retenue de revêtement (22) pour former une couronne dentaire,
dans lequel la couche de retenue de revêtement comprend une pluralité d'ouvertures (30), dans lequel une interface entre la couche de base métallique et la couche de retenue de revêtement comprend une pluralité de régions interstitielles (32),
dans lequel la coque et la couche de retenue de revêtement comprennent toutes deux des matériaux imprimés tridimensionnels **caractérisé en ce que** la couche de retenue de revêtement comprend une structure de maillage de fils métalliques allongés (26),
et dans lequel la pluralité de régions interstitielles est entre les fils métalliques et la couche de base.

13. Procédé selon la revendication 12, comprenant en outre l'application d'une composition de revêtement durcissable sur la couche de retenue de revêtement et en continu au sein de la pluralité des régions interstitielles et des ouvertures.

14. Procédé de formation d'une couronne dentaire (10), comprenant :
la fourniture d'une construction multicouche comprenant :
une couche de base continue, non poreuse métallique (20) ;
une couche de retenue de revêtement imprimée de manière tridimensionnelle (22) adjacente à la couche de base métallique,
dans lequel la couche de retenue de revêtement comprend une pluralité d'éléments de retenue de revêtement (27),
dans lequel il y a une pluralité d'ouvertures (30) entre les éléments de retenue de revêtement, dans lequel en outre une interface entre la couche de base métallique et les éléments de retenue de revêtement comprend une pluralité de régions interstitielles (32), **caractérisé en ce que** les éléments de retenue de revêtement comprennent un maillage de fils métalliques allongés (26),
dans lequel la pluralité d'ouvertures est entre la pluralité de fils métalliques, et dans lequel la pluralité de régions interstitielles est entre les fils métalliques et la couche de base ; et
la formation de la construction multicouche en ébauche de couronne dentaire (126).

15. Procédé selon la revendication 14, dans lequel la couche continue non poreuse métallique est imprimée de manière tridimensionnelle avec la couche de retenue de revêtement.
